# EUROPEAN PATENT SPECIFICATION

(11) **EP 3 731 109 B1**
(45) Date of publication and mention of the grant of the patent: **06.07.2022**
(21) Application number: 19171465.8
(22) Date of filing: 26.04.2019
(51) Int. Cl.: G06F 16/11

(54) **VERSIONED BACKUP ON OBJECT ADDRESSABLE STORAGE SYSTEM**
VERSIONIERTES BACKUP AUF OBJEKTADRESSIERBAREM SPEICHERSYSTEM
SAUVEGARDE À VERSIONS SUR UN SYSTÈME DE STOCKAGE ADRESSABLE D'OBJETS

(43) Date of publication of application: 28.10.2020
(73) Proprietor: Datadobi cvba, 3012 Wilsele (BE)
(72) Inventor: Marivoet, Kim, 3360 Lovenjoel (BE)
(74) Representative: IP HILLS NV

(56) References cited:
- US-A1- 2016 077 920
- US-A1- 2018 225 315
- US-B1- 10 254 996

## Description

### Technical Field

Various example embodiments relate to a method for making a versioned snapshot of a file system onto a key-value object addressable storage system.

### Background

Object addressable storage is a data storage architecture that manages data as objects. Such an object comprises a key and a value wherein the key serves as a unique identifier of the value which holds the actual data that is stored. Data can be retrieved from an object addressable storage system by providing the unique identifier upon which the associate data, i.e. value, is returned. Because of the key-value storage, an object addressable storage system stores data in an unstructured manner as opposed to for example a file system. Due to its flexibility and scalability, object addressable storage is provided by various cloud storage providers such as for example by Amazon Web Services S3, and Google Cloud Storage.

An object addressable storage system may also be used for the versioned backup of file systems. In such case, when taking a new snapshot of the file system, each new version of a file system item, e.g. a file or directory, is stored as a new object in the object addressable storage system. The structure of the file system as well as the versioning history may then be conserved by an appropriate selection of the keys and/or by adding extra representations of the file system structure, e.g. in a database or in additional objects. At a certain point in time, older expired snapshots of the file system may be removed by removing the appropriate objects from the object addressable storage system thereby reclaiming storage space. When needed, a certain version of a file system item or the complete file system may be resolved, i.e. the state of the file system item during the time of a certain versioned snapshot is retrieved or restored.

US2016077920A1 discloses a method that includes providing a snapshot counter for a storage system implemented with multiple distributed consistent database instances. The method further includes recognizing the taking of a snapshot of the storage system by incrementing the snapshot counter from a first snapshot counter value to a second snapshot counter value. The method further includes, in response to a first change for one of the distributed consistent databases subsequent to the taking of the snapshot, performing the following: saving state information of the distributed consistent database as the state information existed prior to the change and associating the first snapshot counter value to the state information. Associating the second snapshot counter's value with the distributed consistent database having the first change. Another method for the taking of a snapshot of a distributed consistent database is also described.

### Summary

Amongst others, it is an object of the present disclosure to provide a solution for making a versioned snapshot of a file system onto a key-value object addressable storage system that allows freeing up space in an efficient and economic matter.

This object is achieved, according to a first example aspect of the present disclosure, by the computer-implemented method according to claim 1.

A versioned snapshot of a file system defines a state of the file system to which the file system can be restored by retrieval of the appropriate objects from the object addressable storage system. To this respect, by taking different snapshots, different versioned backups of the file system are created in time. A file system comprises file system items that represent units of data and their hierarchical relationship. To this end, a file system item may refer to a file which represents a unit of data or a directory which defines the hierarchical folder of the file system. A new version of a file system item refers to a file system item that was created or changed since the previous snapshot. When such a new version is encountered during a snapshot, a new object is created onto the object addressable storage system that contains the file system item. Furthermore, when a file system item has been deleted with respect to the previous snapshot, a dedicated type of object is created referred to as a deleted item key-value object. In other words, both the creation, the change and the deletion of a file system item is modelled in the object addressable storage system by the creation of a separate dedicated object. Furthermore, when a directory was deleted on the file system, the same deleted item key-value objects are created for each file system item contained in that directory.

By the creation of the deleted item key-value objects according to the above method, reclaiming storage on the object addressable storage system for a certain file system item may be performed by solely inspecting the stored objects that are associated with the respective file system item. In other words, there is no need to look for further dependencies or relations with other file system items on the object addressable storage system. This is an advantage because for performing a lookup for further dependencies, i.e. for performing a relational search, a searching throughout the object addressable storage system is to be performed in one way or the other. Such relational searching may for example be performed by a partial matching against keys in the addressable storage system or by searching through other means of stored representations of the file system structure. In any case, such relational searching is expensive in terms of amounts of queries to the object addressable storage system and in terms of processing on the object addressable storage system. This results in an unpredictable behaviour because the relational searching does not scale with the size of the file system. By the creation of the deleted item key-value objects according to the above method, the above identified disadvantages are avoided.

In case the file system has multiple levels of directories, a new version of a file system item will also cause a change to the parent directory in the file system. In such case a new key-value object for the parent directory may also be created upon creation of the new key-value object for the new version of the file.

Space reclaiming is performed when one or more of the versioned snapshots are no longer needed, i.e. when one or more versioned snapshots are expired. In such case the one or more expired versioned snapshots are removed by removing the associated out of scope key-value objects. Such removal may be further performed by retrieving associated key-value objects for a file system item and removing the out of scope key-value objects associated with the file system item.

The removal of expired snapshots is thus performed sequentially by removing the out of scope objects of each file system item one by one. As no relational searching is needed when removing these out of scope objects, the removal of expired snapshots scales linearly with the size of the file system.

The removing the one or more expired versioned snapshots further comprises, for a respective file system item, removing an expired object associated with the file system item when the expired object is associated with an expired versioned snapshot and when the expired object is not needed for restoring a non-expired versioned snapshot thereby rendering the expired object out of scope.

This may be done for all expired objects resulting in an optimal storage space reclaim of the object addressable storage system without having to perform any relational searches between file system items.

Advantageously, the removing the one or more expired versioned snapshots further comprises, for a respective file system item, removing a deleted item key-value object associated with the file system item that follows the removed expired object. This results in a further storage reclaim by the removal of the dedicated deleted item objects without losing the possibility to resolve any non-expired file system item.

According to example embodiments the method further comprises resolving one or more file system items to an earlier versioned snapshot by retrieving the object associated with the respective file system item that is most recent with respect to the earliest versioned snapshot.

Again, as with the storage reclaim, also resolving one or more file system items to a previous non-expired versioned snapshot can be achieved without further analysis of the relation between the different file system items.

According to example embodiments, the creating a key-value object further comprises generating a key based on:
- a path of the associated file system item;
- a version indicative for the versioned snapshot
- a type of the associated file system item.

This way, a unique identifier is obtained for each snapshot of a file system item. Moreover, the identifier can be derived from the file system item itself. The type may then comprise at least one of: the associated file system items is a directory; the associated file system item is a file; and the associated file system item is deleted. This way, the deleted item key-value object is identifiable by the key itself. The value of the key-value pair may then comprise the associated file system item.

The versioned snapshot may be indicative for a state of the file system at a certain time or during a certain time interval.

According to example embodiments, the key-value object addressable storage system is a cloud based storage system.

According to a second example aspect, the disclosure relates to a computer program product comprising computer-executable instructions for performing the method according to the first example aspect when the program is run on a computer.

According to a third example aspect, the disclosure relates to a computer readable storage medium comprising the computer program product according to the second example aspect.

According to a fourth example aspect, the disclosure relates to a data processing system configured to perform the method according to the first example aspect.

### Brief Description of the Drawings

Some example embodiments will now be described with reference to the accompanying drawings.
Fig. 1 illustrates steps performed for making versioned backups from a source file system to a destination object addressable storage system according to an example embodiment;
Fig. 2 illustrates steps according to an example embodiment for creating of new key-value objects on an object addressable storage system according to a certain versioned backup of the file system;
Fig. 3 illustrates steps according to an example embodiment for resolving file system items associated with an earlier snapshot version from an object addressable storage system;
Fig. 4 illustrates steps according to an example embodiment for reclaiming storage on an object addressable storage system by removing out of scope objects; and
Fig. 5 shows an example embodiment of a suitable computing system for performing one or several steps in embodiments of the invention.

### Detailed Description of Embodiment(s)

The disclosure relates, among others, to the making of a versioned snapshot of a file system onto a key-value object addressable storage system for the purpose of making backups of the file system. An object addressable storage is a data storage architecture that manages data as objects. Such an object comprises a key and a value wherein the key serves as a unique identifier of the value which holds the actual data that is stored. Data can be retrieved from an object addressable storage system by providing the unique identifier upon which the associate data, i.e. value, is returned. Because of the key-value storage, an object addressable storage system stores data in an unstructured manner as opposed to for example a file system.

The object addressable storage system may be a cloud based object addressable storage system that is interfaceable by a pre-defined application programming interface (API) over a computer network such as the Internet. An example of a cloud based object addressable storage system is Amazon S3 or Amazon Simple Storage Service as offered by Amazon Web Services (AWS) that provides such object addressable storage through a web-based API. Another example is Google Cloud Storage offered by Google providing RESTful object storage on the Google Cloud Platform infrastructure.

A file system refers to a data storage architecture that manages data as files in a hierarchical addressable structure making a file system a structured storage system. To this purpose, a file system also comprises directories or folders allowing grouping of files into separate collections. Both files and directories are file system items within a file system. A file system may refer to a file system under a Unix-like operating system such as ext2, ext3, ext4, XFS, JFS, btrfs, ZFS, the Apple File System, HFS Plus, UFS, HPFS, or to a file system under a Microsoft Windows like operating system such as FAT, NTFS, exFAT, Live File System and ReFS. A file system may be accessible from the operating system that runs the file system. File system items may also be retrieved remotely over a computer network by using a network file system protocol such as the Network File System (NFS), the Common Internet File System (CIFS) or the Apple Filing Protocol (AFP).

According to example embodiments, methods are provided for making a versioned backup of a partial or full file system onto an object addressable storage system. Such methods may be provided as part of computer program that offers backup functionality, i.e. backup computer programs. Such backup computer program may be executed remotely from the source file system and/or the destination object addressable storage system. Commands on both the source file system and/or the destination object addressable storage system may then be sent over a computer network such as the Internet to the respective storage systems.

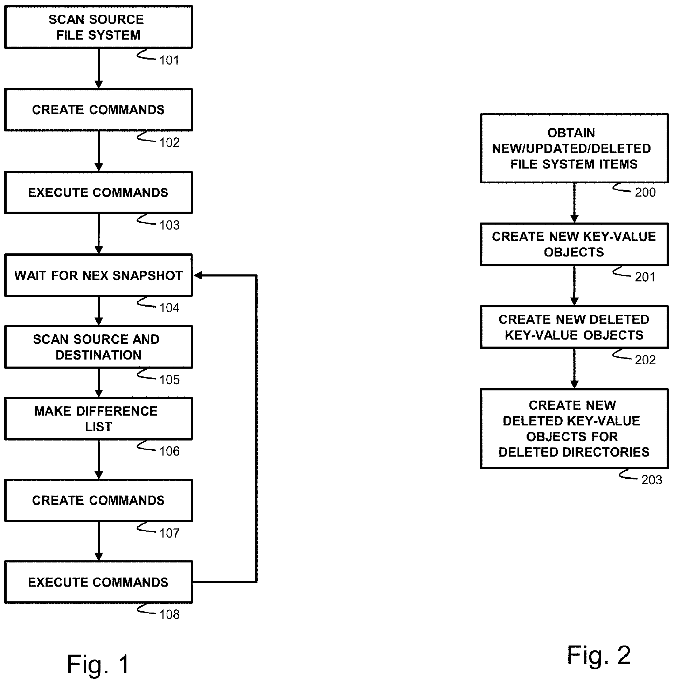

Fig. 1 illustrates steps performed by a backup computer program for making versioned backups from a source storage system, i.e. the source file system, to a destination storage system, i.e. the object addressable storage system according to an example embodiment. In a first step 101, the source file system is scanned for file system items. In a next step 102, the list of file system items is then translated into a list of commands for the creation of objects associated with the file system items on the destination object addressable storage. Thereupon, in step 103, the commands are executed accordingly on the remote object addressable storage system. After step 103, an initial backup of the file system has been made and the method proceeds to a waiting step 104. The method now waits for a trigger to create a new versioned backup of the source file system. Such triggers may be provided periodically according to a predetermined backup interval and/or irregularly upon the occurrence of a certain event, e.g. by a user action. Upon receiving such trigger, the method proceeds to step 105 and scans both the source file system for file system items and the destination storage system to retrieve a representation of the file system after the previous versioned backup. Based on the differences between these lists, a listing of the differences between the new version of the file system and the previous version of the file system is create in step 106. When creating the list with the differences, when a new file system item is available, also the directory containing the file system item is considered to have changed and thus indicated as such. Based on this listing, in a next step 107, a list of commands is generated for creating new objects on the object storage system that represent the new version of the file system. These commands are then executed on a final step 108 upon which the method returns to the waiting step 104.

According to an example embodiment, changed versions of file system items are stored as separate key-value objects on the object addressable storage system. The file system item itself is stored as the value of the object while the key serves as a unique identifier for retrieving the stored object. This key is created when creating the commands under step 103 and 107. The key is at least based on i) a path of the associated file system item on the source file system; ii) a version indicative for the versioned snapshot during which the object was created; and iii) a type of the associated file system item. The type may then comprise an indication that: i) the associated file system items is a directory or similar to a directory such as a symbolic link; ii) the associated file system item is a file; or iii) the associated file system item is deleted during the present executed of the snapshot. The value of the key-value pair may then comprise the associated file system item. For a file type, the value comprises the actual binary file, for a directory type, the value comprises a listing of the content of the directory.

The key may for example be structured as follows:
*<store id*>/<*path hash*>/<*version*>/<*type*>
<store id> is a unique identifier associated with the storage of the file system. <path hash> is a base 64 representation, url safe, padding removed of a hash of the path of the file system item on the file system. Further measures may be taken to ensure the uniqueness of the <path hash>, for example by including an indication of the numbers of levels in the path and/or the number of characters in the path. In order to arrive at a fixed size, the numbers may further be truncated to a fixed number of bytes. The <version> is indicative for the respective version of the version of the respective snapshot and may be represent by a positive integer that is incremented for every new snapshot. The <type> is an indication of the type of the associated file system item, e.g. the <type> may be the letter 'f' for a file, 'd' for a directory and 'fd' or 'dd' when the respective file or directory has been deleted during the respective version of the snapshot. Other <types> may be defined resulting in objects that are created in parallel either with or without versioning such as for example:
- An 'index' type that includes further data that is representative for the respective file system item. The value of such object may then contain the full path of the associated file system item and be used for checking the integrity of the object storage system or track back a certain key of a file system item. The value may also contain a listing of the available versions of the file system items to avoid the need for performing object listings commands when determining the available versions. No versioning is applied to the index type as it describes the actual versions.
- An 'md' type that includes further metadata of the associated file system item, e.g. access permissions for the file system item.

Fig. 2 illustrates steps according to an example embodiment performed by a backup computer program for creation of new objects on the object addressable storage system according to a certain versioned backup of the file system. These steps may be performed during the steps 102-103 and/or steps 107-108 as described with reference to Fig. 1. In a first step 200, a set of updates to the file system with respect to the previous versioned snapshot is obtained, i.e. a set file system items that are new, that have been updated or that have been deleted. This list may be obtained from the initial scan of the file system according to step 101 or from the list with differences as obtained from step 106. In the next step 201, a new key-value object is created for each new or updated file system item, i.e. for each new version of a file system item. Each new key-value object is thus associated with such a new version of the file system item. As such, keys may be created for the objects in the above described format, i.e. *<store id*>/<*path hash*>/<*version*>/*.f* for a new version of a file and *<store id*>/<*path hash*>/<*version*>/*.d* for a new version of a directory. Furthermore, when a new version of a file system item is available, also the parent directory will change, i.e. also a new version of the parent directory is available and, hence, a new key-value object associated with the parent directory is created. Then, in a next step 202, a similar key-value object is created for file system items that were deleted with respect to the previous versioned snapshot. As such, keys may be created for the objects in the above described format, i.e. *<store id*>/<*path hash*>/<*version*>/*.fd* for a file or *<store id*>/<*path hash*>/<*version*>/*.dd* for a directory. Then, in a next step 203, for each of the created objects for a deleted directory, i.e. a deleted item key-value object associated with a deleted file system item, new deleted key-value objects are created for each of the file system items within that directory. For each file system item within the directory object are created with a key of the form *<store id*>/<*path hash*>/<*version*>/*.fd* for a file or *<store id*>/<*path hash*>/<*version*>/*.dd* for a directory. This deletion is further performed in a recursive manner, i.e. also for the subdirectories within the deleted directory.

Making a versioned snapshot according to the above described steps results in a model of the file system within the object addressable storage system that allows both easy resolving of file system items to previous versions and easy reclaiming of obsolete or expired snapshot versions.

Now an example will be described for the creation of versioned snapshots of a file system according to the above described steps. Table 1 below illustrates a set of file system items by their file system pathname and by their type.

**Table 1: example file system items**

| **Pathname** | **Type** |
|---|---|
| d1 | DIRECTORY |
| d1/d2 | DIRECTORY |
| d1/d2/f1 | FILE |
| d1/d2/f2 | FILE |
| d1/d2/l1 | SYMLINK |
| d1/d3 | DIRECTORY |
| d1/d3/f3 | FILE |
| d4 | DIRECTORY |
| d4/f4 | FILE |

Over time the data and/or metadata of the file system items will change, i.e. file content is updated, metadata fields are updated, etc. At regular points in time a versioned snapshot will be taken a snapshot according to step 104. This snapshot results in the list of items that have changed according to step 106. Initially a first snapshot called V₀, is taken according to steps 101 to 103. This snapshot creates an initial set of objects associated with each of the respective file system items of Table 1. Table 2 below illustrates this initial snapshot wherein an 'X' indicates a new file system item and, hence, the creation of a new object.

**Table 2: Initial snapshot of the file system of Table 1**

| **Version** | **d1** | **d2** | **f1** | **f2** | **l1** | **d3** | **f3** | **d5** | **f4** |
|---|---|---|---|---|---|---|---|---|---|
| V₀ | X | X | X | X | X | X | X | X | X |

Suppose now that f1 and f2 are updated and a new snapshot V1 is taken according to the steps 105 to 108 and then another snapshot V2 is taking after updating d2, f1, f3 and f4. This results to the addition of the following two rows to Table 2. As f1 and f2 are contained in d1 and d2, also new versions of these directories are created. The same accounts for f3 and d3 and for f4 and d4.

**Table 3: Three versions of the file system of Table 1**

| **Version** | **d1** | **d2** | **f1** | **f2** | **l1** | **d3** | **f3** | **d4** | **f4** |
|---|---|---|---|---|---|---|---|---|---|
| V₀ | X | X | X | X | X | X | X | X | X |
| V₁ | X | X | X | X | | | | | |
| V₂ | X | X | X | | | X | X | X | X |

Suppose now that d3 and f3 are deleted and then a new snapshot V3 is taken, then Table 3 is updated with a new row as illustrated in Table 4. The forward slash '/' is indicative for the creation of a deleted item objection in the object addressable storage system. As f3 and d3 are contained in directory d1, also this directory d1 is updated.

**Table 4: New snapshot after deletion of d3 and f3**

| **Version** | **d1** | **d2** | **f1** | **f2** | **l1** | **d3** | **f3** | **D4** | **f4** |
|---|---|---|---|---|---|---|---|---|---|
| V₀ | X | X | X | X | X | X | X | X | X |
| V₁ | | | X | X | | | | | |
| V₂ | | X | X | | | | X | | X |
| V₃ | X | | | | | / | / | | |

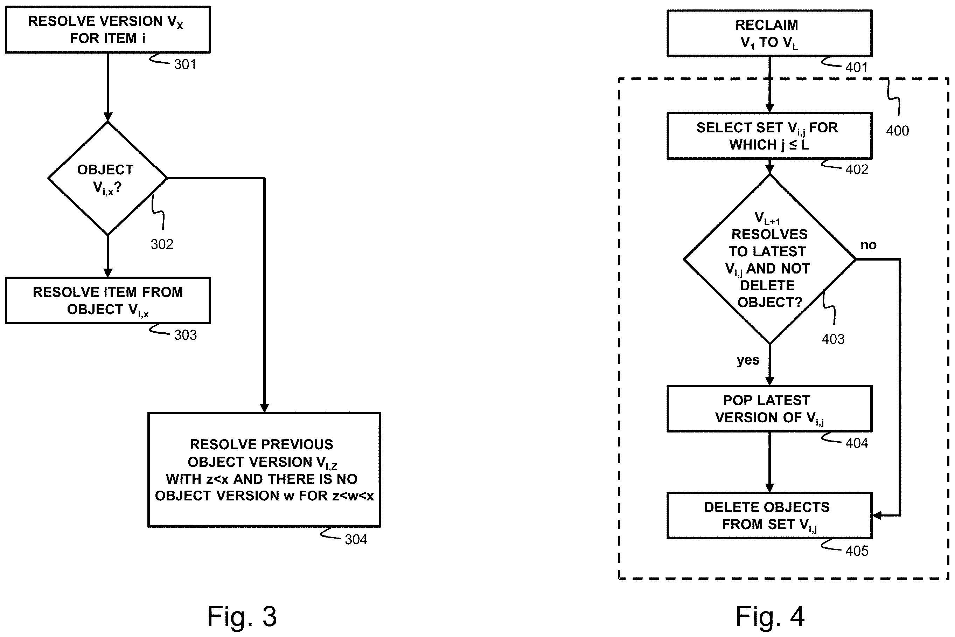

Fig. 3 illustrates steps according to an example embodiment performed by a backup computer program for resolving file system items from the object addressable storage system associated with an earlier snapshot version. In other words, to retrieve an earlier version of one or more file system items. At a certain moment, in a step 301, a certain version Vₓ of a file system item is to be resolved from the object storage wherein the object storage holds different versions V₁ to V_{N} of the file system. This file system item is associated with different stored versions V_{i,k} of the object wherein i is indicative for the respective file system item and k is indicative for the version of the stored object and, hence, the possible values of k are a subset of the versions V₁ to V_{N}. In a next step 302, it is first checked if there is an object associated with the file system item with a version V_{i,x}. If so, the method proceeds to step 303 and resolves the file system item from the stored object with version V_{i,x}, If not, the method proceeds to step 304 and resolves the files system item from the object with version V_{i,y} wherein y<x and there exists no object version w associated with the file system item for wich V_{i,y} < V_{i,w} < V_{i,x}.

In other words, resolving a certain version of a file system item can be done by first checking whether there is an object associated with that certain version. If so, this object is retrieved from the object addressable storage. If not, the object associated with the file system item with the most recent version with respect to the certain version is retrieved from the object addressable storage.

The example of Table 4 further illustrates that each of the file system items can be resolved to any version by solely inspecting the version history of the respective file system item. For example, version V₃ of f4 may be resolved by taking the object created during snapshot V₂.

Fig. 4 illustrates steps according to an example embodiment performed by a backup computer program for reclaiming storage on the object addressable file system by removing objects with an expired version. When the object addressable storage system comprises versions V₁ to V_{N} of the file system that can be resolved according to the method of Fig. 3, then these versions are referred to as being resolvable or alive. At a certain moment, one or more versions V₁ to V_{L} with L<N may become obsolete, i.e. resolving of the file system to one of these versions is no longer needed. Such versions are referred to as expired. By the steps of Fig. 4, storage on the object addressable storage system is freed or reclaimed by deleting the objects associated with file system items that are not needed to resolve the alive versions, i.e. any of the versions V_{L+1} to V_{N}. Such objects that are no longer needed are also referred to as objects that are out of scope.

At a certain moment, in a step 401, one or more versions V₁ with I =1... L are considered expired with V_{L} the most recent expired version are to be removed. The remaining steps may then be iteratively executed for each of the file system items of interest or for all file system items. A respective file system item i is again associated with different stored versions V_{i,k} of the object wherein i is indicative for the respective file system item and k is indicative for the version of the stored object and, hence, the possible values of k are a subset of the versions V₁ to V_{N}. In a next step 402, an initial set of out of scope versions of the object is constructed by taking all available versions V_{i,j} of the object for which version j is smaller than or equal to L. Then in the next step 403, the following condition is verified:
- The latest version of V_{i,j} is needed for resolving the file system item to the version V_{L+1}; and
- The latest version of V_{i,j} is not a deleted item object.
If this condition is true, then the latest version of V_{i,j} is still needed to resolve to versions that are still alive. Therefore, if the condition is true, the method proceeds to step 404 and pops this latest version from the constructed set of available versions V_{i,j} and then proceeds to step 405. In the other case, the method directly proceeds to step 405. In this step 405 all remaining versions V_{i,j} of the objects are removed from the addressable storage system. In other words, the steps in the iteration 400, will remove an any expired version of an object associated with the respective file system item when the expired version is not needed for resolving a non-expired version.

A first example will now be described illustrating the reclaiming according to the above steps. Table 5 illustrates different snapshots taken of a file system using the same annotations as in Tables 1 to 4. The column title 'Status' now indicates that versions V₀ to V₂ are expired.

**Table 5: Objects stored in object storage with out of scope objects for expired versions**

| **Version** | **Status** | **d1** | **f1** | **f2** |
|---|---|---|---|---|
| V₀ | EXPIRED | X | X | X |
| V₁ | EXPIRED | X | / | |
| V₂ | EXPIRED | | | |
| V₃ | ALIVE | | | X |
| V₄ | ALIVE | | | |
| V₅ | ALIVE | / | | / |
| V₆ | ALIVE | | | |

After applying the storage reclaim according to the steps of Fig. 4, several objects are removed as shown by Table 6 below wherein a dash '-' indicates that the respective version of the object has been removed. f1 has been completely removed because the last version was a deleted item object. Hence all expired versions could be deleted. Version V₀ of f2 is not needed for resolving to the earliest non-expired version V₂ and, hence, can be removed. Version V₁ of d1 is needed for resolving to non-expired version V₃ and, hence, cannot be removed. Therefore, only version V₀ of d1 is removed.

**Table 6: Objects stored in de object storage of Table 5 after reclaiming the expired versions**

| **Version** | **Status** | **d1** | **f1** | **f2** |
|---|---|---|---|---|
| V₀ | EXPIRED | - | - | - |
| V₁ | EXPIRED | X | - | |
| V₂ | EXPIRED | | | |
| V₃ | ALIVE | | | X |
| V₄ | ALIVE | | | |
| V₅ | ALIVE | / | | / |
| V₆ | ALIVE | | | |

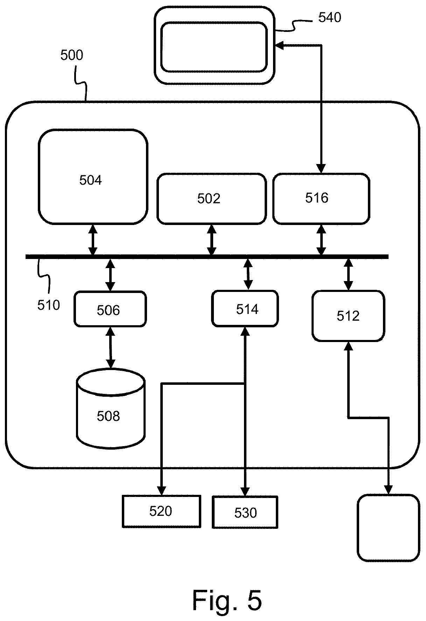

The above described steps may be performed on any suitable circuitry, i.e. suitable for execution of the steps. Fig. 5 shows a suitable computing system 500 for performing the steps according to the various example embodiments. System 500 may be used for executing the backup computer program. Computing system 500 may in general be formed as a suitable general-purpose computer using circuitry comprising a bus 510, a processor 502, a local memory 504, one or more optional input interfaces 514, one or more optional output interfaces 516, a communication interface 512, a storage element interface 506, and one or more storage elements 508. Bus 510 may comprise one or more conductors that permit communication among the components of the computing system 500. Processor 502 may include any type of conventional processor or microprocessor that interprets and executes programming instructions. Local memory 504 may include a random-access memory (RAM) or another type of dynamic storage device that stores information and instructions for execution by processor 502 and/or a read only memory (ROM) or another type of static storage device that stores static information and instructions for use by processor 502. Input interface 514 may comprise one or more conventional mechanisms that permit an operator or user to input information to the computing device 500, such as a keyboard 520, a mouse 530, a pen, voice recognition and/or biometric mechanisms, a camera, etc. Output interface 516 may comprise one or more conventional mechanisms that output information to the operator or user, such as a display 540, etc. Communication interface 512 may comprise any transceiver-like mechanism such as for example one or more Ethernet interfaces that enables computing system 500 to communicate with other devices and/or systems, for example to provide instructions to the source file system and destination object addressable storage system. The communication interface 512 of computing system 500 may be connected to such another computing system by means of a local area network (LAN) or a wide area network (WAN) such as for example the internet. Storage element interface 506 may comprise a storage interface such as for example a Serial Advanced Technology Attachment (SATA) interface or a Small Computer System Interface (SCSI) for connecting bus 510 to one or more storage elements 508, such as one or more local disks, for example SATA disk drives, and control the reading and writing of data to and/or from these storage elements 508. Although the storage element(s) 508 above is/are described as a local disk, in general any other suitable computer-readable media such as a removable magnetic disk, optical storage media such as a CD or DVD, -ROM disk, solid state drives, flash memory cards, ... could be used.

As used in this application, the term "circuitry" may refer to one or more or all of the following:
(a) hardware-only circuit implementations such as implementations in only analog and/or digital circuitry and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and/or processor(s), such as microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in a server, a cellular network device, or other computing or network device.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A computer-implemented method comprising making (104-108) a versioned snapshot of a file system comprising file system items onto a key-value object addressable storage system further comprising:
- creating (201) new key-value objects on the object addressable storage system associated with respective new versions of the file system items;
**characterized in that** the method further comprises:
- when a file system item was deleted on the file system with respected to a previous snapshot, creating (202) a deleted item key-value object on the object addressable storage system indicative for a deletion of the deleted file system item on the file system;
- when the deleted file system item is a directory, creating (203) deleted item key-value objects for the respective files system items in the directory; and
- removing (401-405) one or more expired versioned snapshots by removing (400) associated out of scope key-value objects;
and wherein the removing further comprises, for a respective file system item, removing (405) an expired object associated with the file system item when (402) the expired object is associated with an expired versioned snapshot and when (403) the expired object is not needed for restoring a non-expired versioned snapshot of the file system item thereby rendering the expired object out of scope.

2. The method according to claim 1 further comprising:
- when a new version of a file system item is contained in a parent directory, creating (201) a new key-value object for the parent directory.

3. The method according to claim 1 or 2 wherein the removing further comprises, retrieving (402) associated key-value objects for a file system item and removing (405) out of scope key-value objects for the file system item.

4. The method according to any one of the preceding claims wherein the removing the one or more expired versioned snapshots further comprises, for a respective file system item, removing a deleted item key-value object associated with the file system item that follows a removed expired object.

5. The method according to any one of the preceding claims further comprising resolving (301-304) one or more file system items to an earlier versioned snapshot by retrieving (303-304) the object associated with the respective file system item that is most recent with respect to the earliest versioned snapshot.

6. The method according to any of the preceding claims wherein creating a key-value object further comprises generating a key based on:
- a path of the associated file system item;
- a version indicative for the versioned snapshot
- a type of the associated file system item.

7. The method according to claim 6 wherein the type comprises at least one of:
- the associated file system item is a directory;
- the associated file system item is a file; and
- the associated file system item is deleted.

8. The method according to any of the preceding claims wherein the versioned snapshot is indicative for a state of the file system at a certain time or during a certain time interval.

9. The method according to any of the preceding claims wherein creating a key-value object further comprises generating a value comprising the associated file system item.

10. The method according to any of the preceding claims wherein key-value object addressable storage system is a cloud based storage system.

11. A computer program product comprising computer-executable instructions for performing the method according to any of claims 1 to 10 when the program is run on a computer.

12. A computer readable storage medium comprising the computer program product according to claim 11.

13. A data processing system configured to perform the method according to any of claims 1 to 10.

## Patentansprüche

1. Computerimplementiertes Verfahren, umfassend ein Anfertigen (104-108) eines versionierten Schnappschusses eines Dateisystems, umfassend Dateisystemelemente, auf ein nach Schlüssel-Wert-Objekt adressierbares Speichersystem, ferner umfassend:
- Erzeugen (201) neuer Schlüssel-Wert-Objekte auf dem objektadressierbaren Speichersystem, die mit jeweiligen neuen Versionen der Dateisystemelemente assoziiert sind; **dadurch gekennzeichnet, dass** das Verfahren ferner Folgendes umfasst:
- wenn ein Dateisystemelement auf dem Dateisystem mit respektiert auf einen vorherigen Schnappschuss gelöscht wurde, Erzeugen (202) eines Schlüssel-Wert-Objekts für ein gelöschtes Element auf dem objektadressierbaren Speichersystem, das indikativ für ein Löschen des gelöschten Dateisystemelements auf dem Dateisystem ist;
- wenn das gelöschte Dateisystemelement ein Verzeichnis ist, Erzeugen (203) von gelöschten Schlüssel-Wert-Objekten für die jeweiligen Dateisystemelemente in dem Verzeichnis; und
- Entfernen (401-405) eines oder mehrerer abgelaufener versionierter Schnappschüsse durch Entfernen (400) assoziierter Schlüssel-Wert-Objekte außer Geltungsbereich;
und wobei das Entfernen ferner, für ein jeweiliges Dateisystemelement, ein Entfernen (405) eines abgelaufenen Objekts umfasst, das mit dem Dateisystemelement assoziiert ist, wenn (402) das abgelaufene Objekt mit einem abgelaufenen versionierten Schnappschuss assoziiert ist und wenn (403) das abgelaufene Objekt nicht zum Wiederherstellen eines nicht abgelaufenen versionierten Schnappschusses des Dateisystemelements benötigt wird, wodurch das abgelaufene Objekt außer Geltungsbereich gesetzt wird.

2. Verfahren nach Anspruch 1, ferner umfassend:
- wenn eine neue Version eines Dateisystemelements in einem übergeordneten Verzeichnis enthalten ist, Erzeugen (201) eines neuen Schlüssel-Wert-Objekts für das übergeordnete Verzeichnis.

3. Verfahren nach Anspruch 1 oder 2, wobei das Entfernen ferner ein Abrufen (402) assoziierter Schlüssel-Wert-Objekte für ein Dateisystemelement und ein Entfernen (405) von Schlüssel-Wert-Objekten außer Geltungsbereich für das Dateisystemelement umfasst.

4. Verfahren nach einem der vorherigen Ansprüche, wobei das Entfernen des einen oder der mehreren abgelaufenen versionierten Schnappschüsse ferner, für ein jeweiliges Dateisystemelement, ein Entfernen eines gelöschten Schlüssel-Wert-Objekt-Elements umfasst, das mit dem Dateisystemelement assoziiert ist, das einem entfernten abgelaufenen Objekt folgt.

5. Verfahren nach einem der vorherigen Ansprüche, ferner umfassend ein Auflösen (301-304) eines oder mehrerer Dateisystemelemente zu einem früheren versionierten Schnappschuss durch Abrufen (303-304) des Objekts, das mit dem jeweiligen Dateisystemelement assoziiert ist, das in Bezug auf den frühesten versionierten Schnappschuss am jüngsten ist.

6. Verfahren nach einem der vorherigen Ansprüche, wobei ein Erzeugen eines Schlüssel-Wert-Objekts ferner ein Erzeugen eines Schlüssels umfasst, der auf Folgendem basiert:
- einem Pfad des assoziierten Dateisystemelements;
- einer Version, die indikativ für den versionierten Snapshot ist
- einem Typ des assoziierten Dateisystemelements.

7. Verfahren nach Anspruch 6, wobei der Typ mindestens eines von Folgenden umfasst:
- das assoziierte Dateisystemelement ist ein Verzeichnis;
- das assoziierte Dateisystemelement ist eine Datei; und
- das assoziierte Dateisystemelement ist gelöscht.

8. Verfahren nach einem der vorherigen Ansprüche, wobei der versionierte Schnappschuss indikativ für einen Zustand des Dateisystems zu einem bestimmten Zeitpunkt oder während eines bestimmten Zeitintervalls ist.

9. Verfahren nach einem der vorherigen Ansprüche, wobei das Erzeugen eines Schlüssel-Wert-Objekts ferner ein Erzeugen eines Werts umfasst, umfassend das assoziierte Dateisystemelement.

10. Verfahren nach einem der vorherigen Ansprüche, wobei das nach Schlüssel-Wert-Objekt adressierbare Speichersystem ein cloudbasiertes Speichersystem ist.

11. Computerprogrammprodukt, umfassend computerausführbare Anweisungen zum Durchführen des Verfahrens nach einem der Ansprüche 1 bis 10, wenn das Programm auf einem Computer ausgeführt wird.

12. Computerlesbares Speichermedium, umfassend das Computerprogrammprodukt nach Anspruch 11.

13. Datenverarbeitungssystem, das konfiguriert ist, um das Verfahren nach einem der Ansprüche 1 bis 10 durchzuführen.

## Revendications

1. Procédé mis en œuvre par ordinateur comprenant l'élaboration (104-108) d'un instantané versionné d'un système de fichiers comprenant des éléments de système de fichiers sur un système de stockage adressable d'objets clé-valeur comprenant en outre :
- la création (201) de nouveaux objets clé-valeur sur le système de stockage adressable d'objets associés aux nouvelles versions respectives des éléments de système de fichiers ; **caractérisé en ce que** le procédé comprend en outre :
- lorsqu'un élément de système de fichiers a été supprimé sur le système de fichiers par rapporté à un instantané précédent, la création (202) d'un objet clé-valeur d'élément supprimé sur le système de stockage adressable d'objet indiquant une suppression de l'élément de système de fichiers supprimé sur le système de fichiers ;
- lorsque l'élément de système de fichiers supprimé est un répertoire, la création (203) des objets clé-valeur d'élément supprimé pour les éléments de système de fichiers respectifs dans le répertoire ; et
- le retrait (401-405) d'un ou de plusieurs instantanés versionnés expirés en retirant (400) des objets clé-valeur hors champ associés ;
et ledit retrait comprenant en outre, pour un élément de système de fichiers respectif, le retrait (405) d'un objet expiré associé à l'élément de système de fichiers lorsque (402) l'objet expiré est associé à un instantané versionné expiré et lorsque (403) l'objet expiré n'est pas nécessaire pour restaurer un instantané versionné non expiré de l'élément de système de fichiers, rendant ainsi l'objet expiré hors champ.

2. Procédé selon la revendication 1 comprenant en outre :
- lorsqu'une nouvelle version d'un élément de système de fichiers est contenue dans un répertoire parent, la création (201) d'un nouvel objet clé-valeur pour le répertoire parent.

3. Procédé selon la revendication 1 ou 2, ledit retrait comprenant en outre la récupération (402) d'objets clé-valeur associés pour un élément de système de fichiers et le retrait (405) d'objets clé-valeur hors champ pour l'élément de système de fichiers.

4. Procédé selon l'une quelconque des revendications précédentes, ledit retrait du ou des instantanés versionnés expirés comprenant en outre, pour un élément de système de fichiers respectif, le retrait d'un objet valeur-clé d'élément supprimé associé à l'élément de système de fichiers qui suit un objet expiré retiré.

5. Procédé selon l'une quelconque des revendications précédentes, comprenant en outre la résolution (301-304) d'un ou plusieurs éléments de système de fichiers en un instantané versionné antérieur en récupérant (303-304) l'objet associé à l'élément de système de fichiers respectif qui est le plus récent par rapport à l'instantané versionné le plus ancien.

6. Procédé selon l'une quelconque des revendications précédentes, ladite création d'un objet clé-valeur comprenant en outre la génération d'une clé sur la base de :
- un chemin de l'élément de système de fichiers associé ;
- une version indiquant l'instantané versionné
- un type de l'élément de système de fichiers associé.

7. Procédé selon la revendication 6, ledit type comprenant au moins l'un parmi :
- l'élément de système de fichiers associé est un répertoire ;
- l'élément de système de fichiers associé est un fichier ; et
- l'élément de système de fichiers associé est supprimé.

8. Procédé selon l'une quelconque des revendications précédentes, ledit instantané versionné indiquant un état du système de fichiers à un certain moment ou pendant un certain intervalle de temps.

9. Procédé selon l'une quelconque des revendications précédentes, ladite création d'un objet clé-valeur comprenant en outre la génération d'une valeur comprenant l'élément de système de fichiers associé.

10. Procédé selon l'une quelconque des revendications précédentes, ledit système de stockage adressable d'objet clé-valeur étant un système de stockage en nuage.

11. Produit-programme informatique comprenant des instructions exécutables par ordinateur permettant de réaliser le procédé selon l'une quelconque des revendications 1 à 10 lorsque ledit programme est exécuté sur un ordinateur.

12. Support de stockage lisible par ordinateur comprenant le produit-programme informatique selon la revendication 11.

13. Système de traitement de données configuré pour réaliser le procédé selon l'une quelconque des revendications 1 à 10.
